# DEMANDE DE BREVET EUROPEEN

(11) **EP 3 643 400 A1**
(43) Date de publication de la demande: **29.04.2020**
(21) Numéro de dépôt: 19203885.9
(22) Date de dépôt: 17.10.2019
(51) Int. Cl.: B01J 20/18, B01J 20/30, B01J 20/34, B65D 81/00, F17C 11/00

(54) **PROCÉDÉ DE CONDITIONNEMENT D'UN RÉCIPIENT COMPRENANT UN MATÉRIAU GRANULAIRE**

(30) Priorité: 26.10.2018 FR 1859951
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: RODRIGUES, Guillaume, 94503 Champigny-sur-Marne (FR); GUERET, Vincent, 94503 Champigny-sur-Marne (FR)
(74) Mandataire: Laigneau, Amandine

(57) **Abrégé**

Procédé de conditionnement d'un récipient comprenant un matériau granulaire A permettant l'adsorption de l'azote contenu dans un flux de gaz d'alimentation, comprenant une étape d'injection dans le récipient d'un gaz ou d'un mélange gazeux G tel que la capacité d'adsorption du matériau A vis-à vis de G soit inférieure à 10 Ncm³/g à 25°C et 1 atm

## Description

La présente invention est relative à un procédé de conditionnement d'un récipient comprenant un matériau granulaire A permettant l'adsorption de l'azote.

La présente invention s'appliquera à la fois aux fûts d'adsorbants, par exemple fûts de fournisseurs d'adsorbants ainsi qu'aux adsorbeurs.

Concernant l'application aux adsorbeurs même si la présente invention s'appliquera en priorité aux adsorbeurs de type VSA (Vacuum Swing Adsorption = procédé de séparation de gaz par adsorption à variation de vide) la présente invention pourra également s'appliquer à tous les adsorbeurs de type PSA (Pressure Swing Adsorption = procédés de séparation de gaz par adsorption modulée en pression) :
- les procédés VSA sont des procédés d'adsorption à modulation de pression dans lequel l'adsorption s'effectue sensiblement à la pression atmosphérique, dite pression haute, c'est-à-dire entre 1 bara et 1,5 bar, et la désorption s'effectue à une pression inférieure à la pression atmosphérique, typiquement entre 0,3 à 0,5 bar.
- les procédés VPSA dans lesquels l'adsorption s'effectue à une pression haute sensiblement supérieure à la pression atmosphérique, c'est à dire généralement entre 1,6 et 8 bara, préférentiellement entre 2 et 6 bara, et la pression basse est inférieure à la pression atmosphérique, typiquement entre 30 et 800 mbara, de préférence entre 100 et 600 mbara.
- les procédés PSA dans lesquels l'adsorption s'effectue à une pression haute nettement supérieure à la pression atmosphérique, typiquement entre 1,6 et 50 bara, préférentiellement entre 2 et 35 bara, et la pression basse est supérieure ou sensiblement égale à la pression atmosphérique, donc entre 1 et 9 bara, de préférence entre 1,2 et 2,5 bara.

Par la suite on utilisera le terme (V)PSA qui regroupera les VSA, les PSA, et les VPSA.

Les cycles de (V)PSA comprennent au moins les étapes suivantes : production, décompression, purge, recompression.

Dans le cas d'un adsorbeur de V(P)SA O2, le tamis moléculaire a pour fonction de retenir sélectivement l'azote par rapport à l'Oxygène et l'argon. Celui-ci présente donc une très grande affinité vis-à-vis de l'azote, celle-ci évoluant de manière très sensible avec la température à laquelle le matériau est exposé.

De manière classique, le matériau est activé chez le fabricant d'adsorbant avec de l'air préférentiellement sec et puis exposé à un balayage à l'air sec, à de l'azote ultrapur lors des phases lors du remplissage de l'adsorbeur en atelier afin de minimiser la contamination par l'humidité ambiante. Ainsi, après remplissage, le matériau adsorbant est à l'équilibre avec de l'azote ou de l'air à la pression atmosphérique et à la température de l'atelier.

Par la suite la température externe variera, lors du stockage en atelier, du transport ou du stockage sur le site d'installation avec pour conséquence une adsorption ou une désorption de l'azote (et des autres constituants dans une moindre mesure) selon que la température externe est inférieure ou supérieure à la température de remplissage. Cette respiration du matériau adsorbant induit des risques de pollution (notamment lorsque la pression dans le récipient devient inférieure à la pression atmosphérique) et/ou de dépassement de la pression admissible par l'adsorbeur selon la méthode de conditionnement classiquement choisie.

Partant de là, un problème qui se pose est de fournir un procédé de conditionnement d'un adsorbeur amélioré.

Une solution de la présente invention est un procédé de conditionnement d'un récipient comprenant un matériau granulaire A permettant l'adsorption de l'azote contenu dans un flux de gaz d'alimentation, comprenant une étape d'injection dans le récipient d'un gaz ou d'un mélange gazeux G tel que la capacité d'adsorption du matériau A vis-à vis de G soit inférieure à 10 Ncm³/g à 25°C et 1 atm.

Selon le cas, le procédé selon l'invention peut présenter une ou plusieurs des caractéristiques ci-dessous :
- le récipient est un récipient destiné à stocker de l'adsorbant de manière imperméable à l'air situé à l'extérieur du récipient.
- le récipient est un adsorbeur.
- l'adsorbeur est un adsorbeur de type V(P)SA O2.
- ledit procédé comprend après l'étape d'injection une étape de mise sous pression de l'intérieur de l'adsorbeur à une pression comprise entre 1,05 bar et 3 bar, de préférence comprise entre 1,05 bar et 1,8 bar, encore plus préférentiellement comprise entre 1,1 et 1,5 bar.
- l'étape d'injection consiste en un gonflage avec le gaz G, balayage du gaz G à travers le matériau granulaire A, gonflages avec le gaz G, dégonflages successifs ou combinaison d'au moins deux de ces méthodes. Notons que dans le cas d'un récipient destiné à stocker de l'adsorbant l'injection s'effectuera pendant toute la durée du conditionnement, notamment jusqu'à la fin du refroidissement nécessaire après l'activation de l'adsorbant.
- la capacité d'adsorption du matériau A vis-à vis de G est inférieure à 5 Ncm³/g à 25°C et 1 atm.
- le matériau granulaire A est choisi parmi les zéolites de structures A et X échangées au moins partiellement par un ou plusieurs éléments choisis parmi le lithium, le calcium, le sodium, le potassium, le zinc ou l'argent.
- le gaz G est choisi parmi l'argon, l'oxygène et l'hélium.

Dans le cadre de l'invention, il s'agit de conditionner l'adsorbeur en atelier sous une légère surpression d'un gaz faiblement adsorbable (relativement à l'azote) afin de minimiser la respiration de l'adsorbant lors des cycles de températures auxquels l'adsorbeur peut être soumis lors de son transport ou de son stockage.

Suivant les conditions de remplissage, incluant la composition du mélange de gaz au sein de l'adsorbeur et la température de l'atelier, la pression de remplissage pourra être ajustée de telle sorte que la pression soit toujours inférieure à la pression maximale admissible et soit autant que possible supérieure à la pression atmosphérique. La pression maximale admissible est déterminée par les conditions du procédé pour les adsorbeurs, et donnée par les fournisseurs d'adsorbants.

L'invention s'applique plus particulièrement à un adsorbeur de PSA ou V(P)SA O2 dont l'adsorbant est sélectionné en raison de sa forte affinité avec l'azote.

Le gaz de conditionnement sera préférentiellement de l'Argon, mais peut également être choisi parmi l'O2 ou l'Hélium. L'Hélium représentant un cas idéal en termes de respiration de l'adsorbant puisque son adsorption est quasi nulle, mais s'avère plus coûteux.

La présente invention va être décrite plus en détail à l'aide de l'exemple ci-dessous. L'adsorbeur pris pour l'exemple est un adsorbeur axial de 2 m de diamètre interne comportant un volume de tamis LiLSX de 2.5 m3 et un volume vide complémentaire de 2.7 m³.

A 25°C et 1 atm, les capacités N2, O2 et Ar considérées sur une LiLSX sont respectivement de 22.5 Ncm³/g, 3.8 Ncm³/g et 3.8 Ncm³/g.

On choisit deux états initiaux correspondants à des conditions extrêmes de remplissage en atelier:
- Surpression de 100 mbar et température de 10°C
- Pas de surpression et température de 30°C

Voici les deux états finaux correspondants à des conditions extrêmes d'un stockage sur site :
- Température de 35°C
- Température de 0°C

Pour chacun des 2 cas, l'impact d'un remplissage à l'air sec et à l'Argon a été estimé (cf. tableau 1)

**Tableau 1**

| | | Air de remplissage | Air de remplissage | Argon de remplissage | Argon de remplissage | Argon de remplissage | Argon de remplissage |
|---|---|---|---|---|---|---|---|
| Etat initial | P (bara) | 1.1 | 1 | 1.1 | 1 | 1.5 | 1.5 |
| | T (K) | 10 | 30 | 10 | 30 | 10 | 30 |
| | YN₂ | 0.78 | 0.78 | 0 | 0 | 0 | 0 |
| | YO₂ | 0.22 | 0.22 | 0 | 0 | 0 | 0 |
| | YAr | 0 | 0 | 1 | 1 | 1 | 1 |
| Etat final | P (bara) | 2.08 | 0.44 | 1.44 | 0.61 | 1.98 | 0.91 |
| | T (K) | 35 | 0 | 35 | 0 | 35 | 0 |
| | YN₂ | 0.83 | 0.74 | 0 | 0 | 0 | 0 |
| | YO₂ | 0.17 | 0.36 | 0 | 0 | 0 | 0 |
| | YAr | 0 | 0 | 1 | 1 | 1 | 1 |

On constate que lorsque l'adsorbeur est conditionné avec de l'argon, les variations de pression dans l'adsorbeur fermé sont sensiblement moindres qu'avec un remplissage à l'air sec. Notamment, la pression maximale atteinte avec un remplissage à l'air excède la pression de maximale admissible d'un adsorbeur de VSA typique (2 bara) alors qu'avec un conditionnement à l'argon, cette limite est loin d'être atteinte. Le cas le plus favorable est un conditionnement à une pression proche de 1.5 bara permettant de ne jamais excéder 2 bara et descendre sous 0.9 bara lorsque la température variera dans un intervalle de 0°C à 35°C dans l'adsorbeur pendant son stockage ou son transport.

Plus le volume de l'adsorbeur sera grand par rapport à la quantité de matériau adsorbant sélectif vis-à-vis de l'azote, plus il sera aisé de sélectionner une plage de pression de remplissage permettant de rester dans l'intervalle [Patm-Pmax admissible]. Notons que le volume de l'adsorbeur peut être compris entre 1 litre et 200 m³.

## Revendications

1. Procédé de conditionnement d'un récipient comprenant un matériau granulaire A permettant l'adsorption de l'azote contenu dans un flux de gaz d'alimentation, comprenant une étape d'injection dans le récipient d'un gaz ou d'un mélange gazeux G tel que la capacité d'adsorption du matériau A vis-à vis de G soit inférieure à 10 Ncm³/g à 25°C et 1 atm.

2. Procédé selon la revendication 1, **caractérisé en ce que** le récipient est un récipient destiné à stocker de l'adsorbant de manière imperméable à l'air situé à l'extérieur du récipient.

3. Procédé selon la revendication 1, **caractérisé en ce que** le récipient est un adsorbeur.

4. Procédé selon la revendication 3, **caractérisé en ce que** l'adsorbeur est un adsorbeur de type V(P)SA O2.

5. Procédé selon l'une des revendications 3 ou 4, **caractérisé en ce que** ledit procédé comprend après l'étape d'injection une étape de mise sous pression de l'intérieur de l'adsorbeur à une pression comprise entre 1,05 bar et 3 bar, de préférence comprise entre 1,05 bar et 1,8 bar, encore plus préférentiellement comprise entre 1,1 et 1,5 bar.

6. Procédé selon l'une des revendications 1 à 5, **caractérisé en ce que** l'étape d'injection consiste en un gonflage avec le gaz G, un balayage du gaz G à travers le matériau granulaire A, des gonflages avec le gaz G, dégonflages successifs ou combinaison d'au moins deux de ces méthodes.

7. Procédé de conditionnement selon l'une des revendications 1 à 6, **caractérisé en ce que** la capacité d'adsorption du matériau A vis-à vis de G est inférieure à 5 Ncm³/g à 25°C et 1 atm.

8. Procédé de conditionnement selon l'une des revendications 1 à 7, **caractérisé en ce que** le matériau granulaire A est choisi parmi les zéolites de structures A et X échangées au moins partiellement par un ou plusieurs éléments choisis parmi le lithium, le calcium, le sodium, le potassium, le zinc ou l'argent.

9. Procédé de conditionnement selon l'une des revendications 1 à 8, **caractérisé en ce que** le gaz G est choisi parmi l'argon, l'oxygène et l'hélium.
